(19) Europäisches Patentamt / European Patent Office / Office européen des brevets

(11) **EP 3 389 816 B1**

(12) **FASCICULE DE BREVET EUROPEEN**

(45) Date de publication et mention de la délivrance du brevet:
**06.05.2020 Bulletin 2020/19**

(21) Numéro de dépôt: **16809424.1**

(22) Date de dépôt: **14.12.2016**

(51) Int Cl.:
**B01D 29/01** *(2006.01)* **B01D 29/90** *(2006.01)*
**G01N 33/28** *(2006.01)*

(86) Numéro de dépôt international:
**PCT/EP2016/081064**

(87) Numéro de publication internationale:
**WO 2017/102881 (22.06.2017 Gazette 2017/25)**

(54) **DISPOSITIF DE FILTRATION D'UNE SUSPENSION**

VORRICHTUNG ZUM FILTERN EINER SUSPENSION

APPARATUS FOR FILTERING A SUSPENSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2015 FR 1562426**

(43) Date de publication de la demande:
**24.10.2018 Bulletin 2018/43**

(73) Titulaires:
• **Commissariat à l'Energie Atomique et aux Energies Alternatives**
  **75015 Paris (FR)**
• **Flowersep**
  **47310 Estillac (FR)**

(72) Inventeurs:
• **FERAUD, Jean-Pierre**
  **84100 Orange (FR)**
• **RANDRIAMANANTENA, Tojonirina**
  **30200 Bagnols-sur-ceze (FR)**
• **SALEMI, Laurent**
  **26130 St Paul Trois Chateaux (FR)**
• **BOURCIER, Damien**
  **84000 Avignon (FR)**
• **CHEZAUD, David**
  **47360 Lacepede (FR)**
• **BORTOLIN, Etienne**
  **47500 Montayral (FR)**

(74) Mandataire: **Brevalex**
  **95, rue d'Amsterdam**
  **75378 Paris Cedex 8 (FR)**

(56) Documents cités:
WO-A1-2008/144165    WO-A2-2013/076242
DE-A1- 4 135 660

**Description**

Le sujet de l'invention est un dispositif de filtration d'une suspension de particules solides à l'origine présentes dans un liquide, qu'un filtre retient et qui forment ce qu'on appelle un gâteau sur le filtre.

La séparation solide-liquide est une opération de génie chimique très répandue dans de nombreuses applications industrielles, comme la pharmacie, l'agroalimentaire, l'énergie, le traitement de l'eau, les biotechniques, etc. Des techniques de séparation très variées ont été développées, parmi lesquelles, outre la filtration, on citera celles qui recourent à une séparation par différences de densités de matériaux.

Des essais peuvent être entrepris sur le gâteau solide formé par la séparation solide-liquide, afin de déterminer certaines de ses propriétés, comme la perméabilité et la compressibilité de sa structure poreuse. Les propriétés du gâteau dépendent néanmoins de la technique de séparation appliquée, et notamment de son effet sur l'homogénéité du gâteau.

Les deux propriétés citées ci-dessus peuvent être évaluées par des essais, d'après lesquels un piston est descendu progressivement dans une cellule cylindrique dans laquelle le gâteau se forme et au bout duquel se situe le filtre. On applique des rampes successives de pression au piston, de manière à comprimer progressivement le gâteau pour qu'il exprime peu à peu le liquide qui y est contenu. La masse de liquide évacuée en fonction du temps est mesurée et permet de déterminer la résistance à l'écoulement et la compressibilité du gâteau. On se heurte néanmoins à certaines contraintes et notamment à l'influence des parois, qui perturbent les résultats par des effets de bord et imposent un rayon minimal à la cellule de mesure, et donc un volume assez important pour le gâteau, afin de ne pas biaiser les résultats : le diamètre de la cellule doit être de 5 cm au minimum, d'après la norme NFT 97001. Cela impose donc l'utilisation de plus d'une dizaine de grammes de matière solide pour former le gâteau, et de gros volumes de suspension, pouvant atteindre plusieurs litres pour les mélanges peu concentrés. Il faut ajouter que les essais peuvent durer plusieurs jours. Certains équipements simplifiés comprennent, au lieu du piston, un système de filtration sous vide, équipé d'un milieu filtrant, et le gâteau est soumis à une dépression par une aspiration. Les mesures de perméabilité restent possibles, mais le domaine d'étude en pression, compris entre 0 et 1 bar, est trop faible pour obtenir les paramètres de compressibilité du gâteau formés de suspension difficilement filtrables.

D'autres dispositifs et procédés ont cependant été développés. Le document EP 0 104 785 A3 décrit un appareil et une méthode de mesure de la filtrabilité de fluides. Il est composé d'un cylindre qui peut être mis sous pression et qui contient un milieu filtrant à mi-hauteur. Une mesure de débit permet de déduire la filtrabilité du fluide, en prenant en compte la résistance du milieu filtrant. On ne prend cependant pas en compte l'influence de suspensions dont le fluide serait chargé et la mesure ne concerne pas une résistance à l'écoulement.

Le document WO 2007/054 146 A1 décrit un dérivé de cette méthode, qui est alors accompli en fonction de la température. Là encore, l'effet de suspensions solides et de résistance à l'écoulement du milieu filtrant n'est pas abordé.

WO 2002/066 140 A1 détaille un appareil permettant de mesurer la filtrabilité de liquides faiblement chargés, tels que la bière et le vin. Un programme mené par un logiciel permet d'automatiser la mesure. La mesure se fait en enregistrant le débit initial et le débit final et en faisant un rapport pour tirer une filtrabilité relative. La cellule de l'appareil a 12,5 cm$^2$ de superficie. L'appareil ne peut pas convenir à la mesure de résistance de suspensions solides. On n'aborde pas non plus les aspects de construction de gâteaux de filtration, ni même de compressibilité.

WO 1995/018 198 A1 décrit un procédé de filtration et de combustion de matières carbonées issue de moteurs à combustion interne. Il comporte les dispositions suivantes :

-  introduire dans le carburant un dérivé de terres rares ou le mélange de terres rares à une concentration comprise entre 10 et 500 ppm en masse, de préférence entre 20 et 200 ppm ;
-  recueillir sur un filtre les suies produites par le moteur à combustion interne, la température des gaz entrant dans le filtre étant choisie dans l'intervalle entre 100°C et 350°C ;
-  laisser les suies s'accumuler jusqu'à atteindre un régime où une fraction notable des suies arrivantes est compensée par la combustion de suies dans le gâteau de suies sur le filtre, et ne prévoir aucune régénération tant que la perte de charge provoquée par les suies n'excède pas une valeur choisie à l'avance et n'excédant pas 400 mbars. Il ne propose cependant pas de mesures associées, ni même d'amélioration pour les pertes de charges plus élevées.

US 4 514 306 A présente une méthode et un appareil pour déterminer la quantité de floculants nécessaires pour obtenir un gâteau qui possède une résistance constante et optimale. Cette mesure est réalisée en enregistrant la pression et le débit en différents points du gâteau à 3,5 bars. Mais le procédé est coûteux en temps et en matière, et il ne permet pas de mesurer la compressibilité des gâteaux.

WO 2002/077 555 A1 concerne un système et une méthode pour mesurer la résistance de gâteaux lyophilisés. Il consiste à pousser avec un piston sur le gâteau et possède donc les inconvénients mentionnés plus haut.

Dans l'industrie pétrolière, la compressibilité des sols a souvent fait l'objet d'études. EP 1 553 260 A2 développe un module d'études de la compressibilité des boues. La méthode met en œuvre un outil de fond de puits positionné dans une formation souterraine adjacente à un puits de forage. La mesure de compressibilité reste donc locale et compliquée à mettre en œuvre ; elle n'est pas adaptée à un laboratoire d'analyses et ne permet pas la mesure directe de la résistance à l'écoulement.

WO 2008/144 165 A concerne une méthode automatisée de mesures de caractéristiques d'un fluide de forage, consistant à quantifier la masse de solides formée par filtration d'un échantillon du liquide de forage. Il n'est fait aucune mention de notions de filtrabilité et/ou de compressibilité puisqu'il est seulement question de la caractérisation du liquide de forage.

WO 2013/076242 décrit un système de filtration comprenant les caractéristiques techniques telles que définies dans le préambule de la revendication 1.

US 5 954 922 A décrit, dans l'industrie du papier, qui est également demandeuse de mesures de résistance à l'écoulement, une méthode pour mesurer la compressibilité et la résistance de suspensions de pâte à papier avec un contrôle sur place. L'essai se fait en mesurant la hauteur restante au sein de la cuve de filtration en fonction du temps. Les dimensions rencontrées, de l'ordre de la dizaine de centimètres, ainsi que les échelles de temps, de l'ordre de l'heure, ne conviennent pas pour une mesure miniaturisée en laboratoire, qu'on veut rapide.

Un premier avantage de l'invention est qu'elle permet de travailler sur de tout petits volumes de gâteaux solides, pouvant atteindre quelques centimètres cube, sans craindre l'influence perturbatrice de parois de la cellule dans laquelle le gâteau est contenu, et avec des durées d'essais très réduites.

Il devient possible de garantir une bonne qualité de mesure des propriétés du gâteau, grâce à une construction homogène de celui-ci, associée à des conditions d'écoulement uniformes à travers lui, qui permettent d'appliquer favorablement des procédés de mesure où on ne recourt pas à un piston compresseur, mais à une application de pression du liquide, pour mesurer la compressibilité et la perméabilité ; ces procédés ont en effet l'avantage d'être très peu sensibles aux effets de bords, et ils permettent donc la réduction du diamètre de la cellule et du volume du gâteau à former, sans perturber notablement les résultats de mesure, à condition toutefois de garantir l'uniformité de l'écoulement à travers le gâteau, et l'homogénéité de celui-ci.

D'autres avantages de l'invention sont la facilité à faire varier les conditions d'exécution des essais, au moyen d'une grande modularité des équipements du dispositif; et la possibilité de confiner facilement le dispositif dans une enceinte protégée, permettant ainsi une étude aisée de produits dangereux, en utilisant des dispositifs de télémanipulation par exemple, grâce à la petite taille et à la simplicité de conception que permet le dispositif.

Sous une forme générale, l'invention est relative à un dispositif de filtration d'un liquide chargé en particules solides, comprenant une cellule enclosant une chambre de formation d'un gâteau des particules solides, et un dispositif d'écoulement du liquide comprenant une canalisation menant à un côté amont de la chambre, la canalisation étant jointe à la chambre par un dispositif de raccord ayant une section plus petite qu'une section de la chambre, et un filtre arrêtant les particules solides situé à un côté aval de la chambre, caractérisé en ce que le dispositif de raccord comprend un diffuseur de l'écoulement adjacent à la chambre, le diffuseur est traversé d'une pluralité de canaux reliant le raccord à la chambre, les canaux comprennent des canaux divergents, ayant des orifices débouchant dans la chambre en un cercle de section plus grande qu'un rayon du raccord.

Le diffuseur permet de répartir l'écoulement de fluide sur toute la section du gâteau, en évitant donc de le concentrer sur son axe central, ce qui est normalement le cas avec ces dispositifs, où le gâteau cylindrique doit avoir normalement un diamètre plus important que la canalisation d'écoulement, afin de limiter l'influence des effets de bords sur la construction du gâteau et la qualité de l'essai ; ce besoin subsiste même avec des agencements favorables de la cellule et de l'écoulement, qui réduisent ces effets de bord et permettent donc de réduire quelque peu le diamètre minimal du gâteau.

Il permet aussi d'utiliser des canalisations d'arrivée du liquide chargé des suspensions ayant un diamètre beaucoup plus petit, afin d'y favoriser des vitesses d'écoulement qui sont suffisantes pour éviter des décantations du liquide même à débit d'écoulement très faible.

Cet aspect principal de l'invention, ainsi que d'autres aspects, caractéristiques et avantages de celle-ci, sera maintenant décrit en liaison aux figures suivantes :

- la figure 1 est une vue générale d'une réalisation d'un appareil de filtration et d'essai où l'invention est présente ;
- la figure 2 illustre la cellule de filtration de l'appareil ;
- les figures 3 et 4 représentent deux réalisations possibles du diffuseur caractéristique de l'invention ;
- et la figure 5 illustre une autre réalisation d'un appareil de filtration.

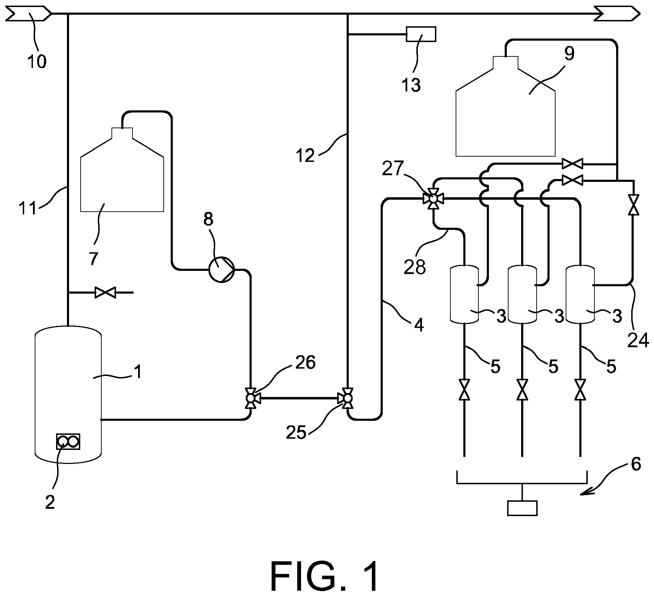

On se reporte à la Figure 1. Un réservoir 1 contient la suspension, dont la phase solide en équilibre avec le liquide est destinée à former le gâteau à étudier. Un agitateur 2, pouvant consister en un barreau magnétique mû à distance, en forme d'olive dépourvue d'arêtes, y est contenu. Son rôle est de maintenir l'homogénéité de la suspension sans affecter la constitution du solide en le cisaillant, grâce à une agitation douce du mélange et à la forme du barreau. Un constituant essentiel du dispositif est une cellule 3, reliée au réservoir 1 par une canalisation 4. La cellule 3 est, dans ce mode particulier de réalisation, à trois exemplaires identiques, desservis indépendamment par une vanne de distribution 27, qui raccorde des embranchements 28 de la canalisation 4 aux cellules 3. Chacune des cellules 3 comprend un exutoire 5 à sa partie inférieure, composé d'un tuyau muni d'une vanne et surplombant une balance 6, ou un autre dispositif permettant de mesurer le volume ou la masse d'un liquide s'écoulant de cet exutoire 5. D'autres constituants du dispositif sont un récipient de rinçage 7, relié à la canalisation 4 par une pompe 8, un réservoir de drainage 9, relié entre autres à la cellule 3, une alimentation en air comprimé 10 reliée au ciel du réservoir 1 par une canalisation 11 et à la canalisation 4 par une autre canalisation 12, et qui est munie d'un régulateur de pression 13. Ce dernier pourrait être remplacé par un mano-détendeur réglable avec une mesure de pression analogique. Le fonctionnement serait à peu près le même, l'opérateur étant toutefois plus impliqué dans le contrôle et le déroulement de l'essai de ce dispositif rendu plus simple et moins coûteux. La pression du liquide pourrait être maintenue par une pompe de recirculation située en amont de la cellule 3.

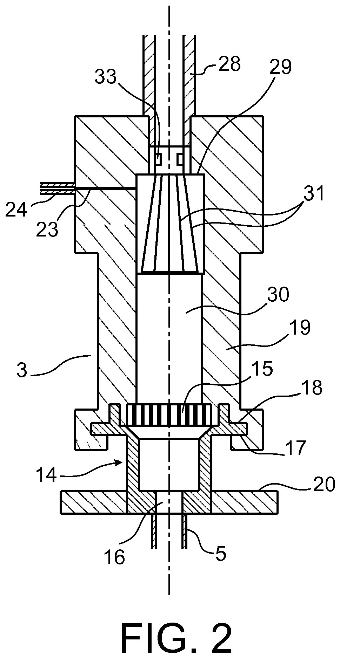

On se reporte à la Figure 2. La cellule 3 est cylindrique et son axe est vertical. Sa paroi latérale 19 est continue. Son fond consiste en un bouchon 14, contenant un ensemble filtrant 15 (composé ici d'un filtre et d'un support ajouré du filtre). Le bouchon 14 comporte un orifice inférieur 16, situé sous l'ensemble filtrant 15, et qui sert de raccordement à la canalisation de l'exutoire 5. Il comprend encore une collerette 17 s'étendant sur deux secteurs opposés de tour et apte à pénétrer dans une gorge 18 de la paroi latérale 19, s'étendant sur des secteurs semblables. Des taquets 20 de manipulation sont enfin prévus à l'extérieur du bouchon 14 pour permettre une rotation manuelle. Dans la position représentée, la collerette 17 est contenue dans la gorge 18 et le bouchon 14 est maintenu au fond de la cellule 3. Si un quart de tour est effectué, la collerette 17 sort de la gorge 18 et le bouchon peut être détaché de la cellule 3.

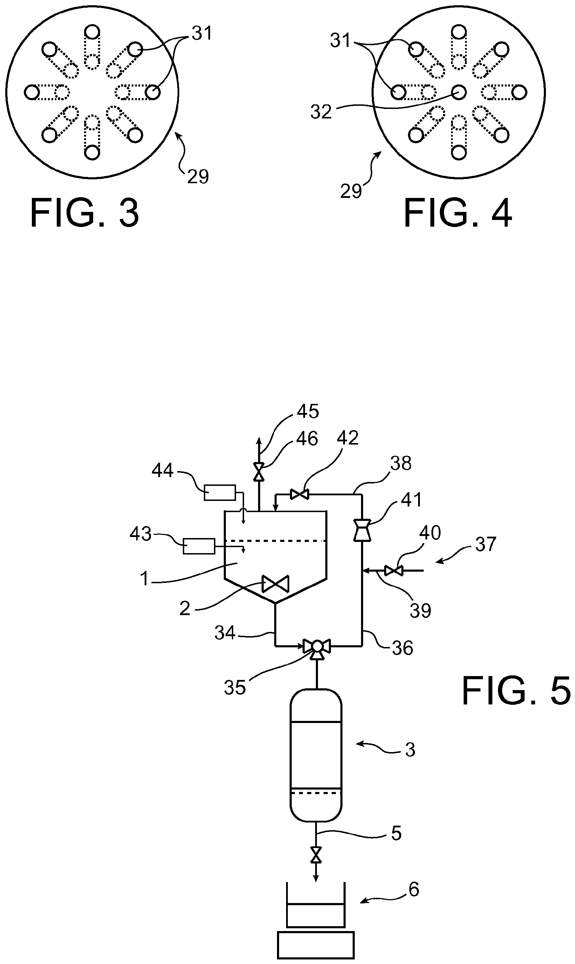

Le sommet de la paroi 19 de la cellule 3 est percé pour recevoir un diffuseur 29 à l'embranchement 28 correspondant. Le diffuseur 29 est de forme cylindrique et délimite la face supérieure de la chambre 30 présente dans la cellule 3, dont l'élément filtrant 15 forme la face inférieure. Le diffuseur 29 relie l'embranchement 28, vissé au sommet de la figure 3, à la chambre 30, une buse 33 de régularisation de l'écoulement étant toutefois intercalée entre l'embranchement 28 et le diffuseur 29. Le raccord entre l'embranchement 28 et la chambre 30 a une section plus étroite que celle de la chambre 31, où un gâteau de diamètre suffisant doit être formé pour affranchir les caractéristiques mesurées des effets de bord. Le diffuseur 29, qui est la pièce du raccord adjacente à la chambre 30, assure une adaptation de diamètre de l'écoulement entre l'embranchement 28 et la chambre 30 de plus grand diamètre. Il comprend en effet des canaux 31 divergents qui, en dispersant l'écoulement originaire de l'embranchement 28, le répartissent sur toute la section de la chambre 30 et notamment près de ses bords.

Ainsi que le montre la figure 3, qui représente une première réalisation envisageable, les canaux 31 sont au nombre de huit, répartis régulièrement sur la circonférence du diffuseur 29, et leurs embouchures dans la chambre 30 sont proches du diamètre extérieur de celle-ci.

Cette réalisation particulière a donné une bonne uniformité de débit et de vitesse du liquide à travers toute la section de la chambre 30, à mesure que le gâteau se formait, ce qui garantissait une bonne uniformité de la construction et des propriétés de ce dernier.

D'autres configurations du réseau de canaux sont évidemment possibles, et on peut par exemple proposer la conception de la figure 4, où un canal central 32 a été ajouté aux précédents, pour mieux favoriser l'écoulement au centre de la cellule 30, si cela est nécessaire. Le diamètre des canaux 31 et 32 n'a pas une grande importance sur l'uniformité de l'écoulement obtenu.

Un essai peut se dérouler comme suit. Le réservoir 1 est connecté à l'une des cellules 3 par l'ouverture des vannes sur la canalisation 4. La pression est appliquée par l'alimentation en air comprimé 10. La cellule 3 est, au mieux, déjà emplie du liquide porteur de la suspension. L'exutoire 5 est alors ouvert, le liquide s'écoule peu à peu dans un récipient de récupération positionné sur la balance 6 et les suspensions s'accumulent dans la cellule 4, en formant un gâteau. Une fonction $t/V = f(V)$ est calculée et donne la résistance à l'écoulement; t désigne le temps et V le volume de liquide évacué et pesé par la balance.

Une fois la filtration achevée, l'alimentation en air comprimé 10 est mise en communication avec la cellule 3 par les canalisations 12 et 4, en ouvrant une vanne 25 située à leur jonction. Le gâteau est asséché. Il est ensuite possible de l'enlever sans inconvénient en retirant le bouchon 14 en utilisant la pression mécanique de l'air comprimé.

Dans une étape finale du procédé, un rinçage est produit, au moyen du contenu du récipient 7 et en ouvrant une vanne 26, qui le relie à la canalisation 4. Le liquide lave la canalisation 4, la cellule 3 et aboutit au réservoir de drainage 9.

La figure 5 illustre un autre mode de réalisation de l'appareil de filtration et d'essai. Un certain nombre de constituants sont semblables à ceux de la réalisation de la figure 1, dont le réservoir 1, l'agitateur magnétique 2, la cellule 3, l'exutoire 5 et la balance 6 et ne seront pas décrits davantage. La cellule 3 est toutefois unique et le réservoir 1 est placé juste au-dessus d'elle et lui est relié par une canalisation 34 verticale qui remplace la canalisation 4. Une vanne de commutation 35 est placée sur la canalisation 34. Elle est reliée à une branche inférieure 36 d'un réseau d'air comprimé 37 qui comprend encore une branche supérieure 38 menant au sommet du réservoir 1 et une branche d'arrivée d'air 39 débouchant dans les branches 36 et 38. La branche d'arrivée d'air 39 est reliée à une source d'air comprimé non représentée et comporte une vanne 40 de fermeture ; et la branche supérieure 38 comporte un manodétendeur 41 et une vanne 42 de fermeture. L'ouverture de la vanne 40 permet donc d'introduire de la pression soit dans le réservoir 1, quand la vanne 42 est ouverte, soit dans la cellule 3 pour réaliser le drainage. Le manodétendeur 41 permet d'appliquer les différentes consignes de pressions. On a représenté certains capteurs usuels, aussi présents dans les réalisations précédentes, mais qui n'y avaient pas été représentés, à savoir un capteur de température 43 et un capteur de pression 44 dans le réservoir 1. Une canalisation supérieure 45 équipée d'une vanne de fermeture 46 permet d'emplir le réservoir 1 en le liquide à étudier.

Examinons les phénomènes physiques mis en jeu au cours de la filtration. La perte de charge comprend une part due au gâteau et une autre part due au support, c'est-à-dire au filtre 15. La perte de charge à travers le gâteau, considéré comme un bloc solide parcouru de capillaires cylindriques, tous identiques et non connectés, peut être estimée

par $\Delta P_z = 200\, \mu U_0 \dfrac{L}{\varphi^2 D_e^2} \cdot \dfrac{(1-\varepsilon)^2}{\varepsilon^3}$, où $\mu$ est la viscosité dynamique de fluide, $U_0$ la vitesse moyenne du fluide dans les capillaires, L l'épaisseur du gâteau, $\varphi$ un facteur de forme de gâteau par rapport à la sphère, $D_e$ le diamètre de la sphère de volume équivalent au gâteau, $\varepsilon$ sa porosité, à partir de la formule classique de Poiseuille $\Delta P = 32\,\mu\, \dfrac{U.l}{d^2}$ donnant la perte de charge dans une conduite cylindrique (ici, le capillaire) de dimensions l et d de longueur et de diamètre pour un fluide de paramètres $\mu$ et U de viscosité et de vitesse, dans des condition d'écoulement laminaire, fortement justifiées ici compte tenu du faible débit et de la taille des pores.

La résistance du support filtrant est d'autre part donnée par l'équation de Darcy ' $R_S = \dfrac{\Delta P_S . \Omega}{\mu . \frac{dV}{dt}}$ , où $\Delta P_s$ est la perte de charge due au support, $\Omega$ la section droite de filtration, $\mu$ encore la viscosité du fluide, $\dfrac{dV}{dt}$ la variation de volume recueilli en fonction du temps, et $R_s$ la résistance. La perte de charge totale est alors donnée par l'équation

$$\Delta P_T = \Delta P_j + \Delta P_S = \alpha . \mu . w . \dfrac{1}{\Omega^2} . V . \dfrac{dV}{dt} + R_S . \dfrac{\mu}{\Omega} . \dfrac{dV}{dt} ,$$ qu'on peut intégrer sous forme $\dfrac{t}{V} = \dfrac{\alpha}{2\Delta P_T} . \dfrac{\mu . w}{\Omega^2} V + \dfrac{R_S}{\Delta P_T} . \dfrac{\mu}{\Omega}$ pour un fonctionnement à pression constante, où w désigne la masse sèche de solide de la suspension rapportée à l'unité de volume du filtrat et $\alpha$ est un coefficient $\left( \alpha = 200 . \dfrac{1-\varepsilon}{\varepsilon^3} - \dfrac{1}{\varphi^2 D_e^2 . \rho} \right)$ susceptible d'exprimer la résistance à l'écoulement ; $\Delta P_T$ correspond en réalité à la surpression appliquée au liquide. On voit donc que la pente de la courbe $\dfrac{t}{V}$ est proportionnelle à cette résistance à l'écoulement : la mesure de cette pente donne donc le coefficient $\alpha$ puisque les paramètres $\Delta P_T$ et $\Omega$ sont connus de l'utilisateur, et que $\mu$ et w peuvent être obtenus par d'autres essais. En répétant la filtration à des pressions différentes par l'action du régulateur 23, on obtient différentes valeurs de $\alpha$ et il est possible de déduire la compressibilité n du gâteau, d'après la formule $\alpha = \alpha_0 . \Delta P_T^n .$

Les conditions d'un écoulement laminaire et régulier, sans déviation jusqu'à la paroi latérale de la cellule 3, sont données de façon améliorée par le diffuseur 29. Des mesures suffisantes peuvent être obtenues avec environ 1 gramme de matière solide. Les manipulations nécessaires sur le dispositif sont très réduites et peuvent être accomplies par télémanipulation à travers une enceinte de protection. Les fluides sont facilement récupérables, de même que les gâteaux solides, grâce à la faculté de démonter facilement le bouchon 14.

Le dispositif de l'invention, équipé du diffuseur 29, permet donc d'étudier dans de bonnes conditions des suspensions aussi bien à faible résistance à l'écoulement, pour lesquelles la construction d'un gâteau homogène est traditionnellement difficile, qu'à grande résistance à l'écoulement : les mesures sont alors exposées à la décantation des suspensions dans l'écoulement en amont de la cellule 3 à cause de la réduction du débit de filtration, mais le diffuseur 29 autorise l'emploi de canalisations 4, 28, 34 de très petit diamètre intérieur (pouvant être de 0,5 cm ou moins ; 0,1 cm par exemple) vers la cellule 3, dans lesquelles la vitesse reste suffisante pour échapper à cette décantation, en permettant l'évasement de l'écoulement dans la chambre 30 de diamètre intérieur beaucoup plus grand (par exemple 5 fois plus grand, ou plus).

Le diffuseur 29 peut avantageusement être en PTFE (polytétrafluoroéthylène) afin d'éviter un mouillage par les liquides et suspension.

**Revendications**

1. Dispositif de filtration d'un liquide chargé en particules solides, comprenant une cellule (3) enclosant une chambre (30) de formation d'un gâteau des particules solides, et un dispositif d'écoulement du liquide comprenant une canalisation (4, 28 et 34) menant à un côté amont de la chambre, la canalisation étant jointe à la chambre par un dispositif de raccord comprenant une section plus petite qu'une section de la chambre, et un filtre (15) arrêtant les particules solides et situé à un côté aval de la chambre, **caractérisé en ce que** le dispositif de raccord comprend un diffuseur (29) de l'écoulement adjacent à la chambre (30), le diffuseur est traversé d'une pluralité de canaux (31, 32) reliant le raccord à la chambre et les canaux comprennent des canaux divergents (31), ayant des orifices débouchant dans la chambre en un cercle de section plus grande qu'un rayon du raccord.

2. Dispositif de filtration d'un liquide chargé en particules selon la revendication 1, **caractérisé en ce que** les canaux divergents sont au moins huit sur le cercle.

3. Dispositif de filtration d'un liquide chargé en particules selon l'une quelconque des revendications 1 ou 2, **caractérisé en ce que** les canaux comprennent un canal central (32) entouré par les canaux divergents (31).

4. Dispositif de filtration d'un liquide chargé en particules selon l'une quelconque des revendications 1 à 3, **caractérisé en ce que** la canalisation a un diamètre intérieur de 0,5 cm, ou moins.

5. Dispositif de filtration d'un liquide chargé en particules selon l'une quelconque des revendications 1 à 4, **caractérisé en ce qu'**un rapport de diamètre de la chambre (30) à un rapport de diamètre intérieur de la canalisation (4, 28, 34) et de 5, ou plus.

6. Dispositif de filtration d'un liquide chargé en particules selon l'une quelconque des revendications 1 à 5, **caractérisé en ce que** le diffuseur (29) est en PTFE.


**Patentansprüche**

1. Vorrichtung zur Filterung einer Flüssigkeit, die mit festen Partikeln beladen ist, umfassend eine Zelle (3), die eine Kammer (30) zur Bildung eines Kuchens der festen Partikel einschließt, sowie eine Vorrichtung zum Strömenlassen der Flüssigkeit, umfassend ein Leitungsnetz (4, 28 und 34), das zu einer stromaufwärtigen Seite der Kammer führt, wobei das Leitungsnetz mit der Kammer durch eine Anschlussvorrichtung verbunden ist, die einen Querschnitt umfasst, der kleiner ist als ein Querschnitt der Kammer, sowie einen Filter (15), der die festen Partikel stoppt und an einer stromabwärtigen Seite der Kammer angeordnet ist, **dadurch gekennzeichnet, dass** die Anschlussvorrichtung einen Strömungsdiffusor (29) umfasst, der der Kammer (30) benachbart ist, wobei der Diffusor von einer Mehrzahl von Kanälen (31, 32) durchsetzt wird, die den Anschluss mit der Kammer verbinden, und wobei die Kanäle divergierende Kanäle (31) umfassen, die Öffnungen haben, die in die Kammer in einem Kreis mit einem Querschnitt münden, der größer ist als ein Durchmesser des Anschlusses.

2. Vorrichtung zur Filterung einer Flüssigkeit, die mit Partikeln beladen ist, nach Anspruch 1, **dadurch gekennzeichnet, dass** die divergierenden Kanäle wenigstens acht auf dem Kreis sind.

3. Vorrichtung zur Filterung einer Flüssigkeit, die mit Partikeln beladen ist, nach einem der Ansprüche 1 oder 2, **dadurch gekennzeichnet, dass** die Kanäle einen zentralen Kanal (32) umfassen, der von den divergierenden Kanälen (31) umgeben ist.

4. Vorrichtung zur Filterung einer Flüssigkeit, die mit Partikeln beladen ist, nach einem der Ansprüche 1 bis 3, **dadurch gekennzeichnet, dass** das Leitungsnetz einen Innendurchmesser von 0,5 cm oder weniger hat.

5. Vorrichtung zur Filterung einer Flüssigkeit, die mit Partikeln beladen ist, nach einem der Ansprüche 1 bis 4, **dadurch gekennzeichnet, dass** ein Durchmesserverhältnis der Kammer (30) zu einem Innendurchmesserverhältnis des Leitungsnetzes (4, 28, 34) fünf oder mehr ist.

6. Vorrichtung zur Filterung einer Flüssigkeit, die mit Partikeln beladen ist, nach einem der Ansprüche 1 bis 5, **dadurch gekennzeichnet, dass** der Diffusor (29) aus PTFE ist.

**EP 3 389 816 B1**

**Claims**

1. Device for filtering a liquid charged with solid particles, comprising a cell (3) enclosing a chamber (30) for forming a cake of the solid particles, and a liquid flow device comprising a conduit (4, 28 and 34) leading to an upstream side of the chamber, the conduit being joined to the chamber by a coupling device comprising a smaller cross-section than a cross-section of the chamber, and a filter (15) stopping the solid particles and situated on a downstream side of the chamber, **characterised in that** the coupling device comprises a diffuser (29) of the flow adjacent to the chamber (30), the diffuser being traversed by a plurality of channels (31, 32) connecting the coupling to the chamber and the channels comprise diverging channels (31), having orifices leading to the chamber in a circle having a greater cross-section than a radius of the coupling.

2. Device for filtering a liquid charged with particles according to claim 1, **characterised in that** there are at least eight diverging channels on the circle.

3. Device for filtering a liquid charged with particles according to any one of claims 1 or 2, **characterised in that** the channels comprise a central channel (32) surrounded by the diverging channels (31).

4. Device for filtering a liquid charged with particles according to any one of claims 1 to 3, **characterised in that** the conduit has an internal diameter of 0.5 cm, or less.

5. Device for filtering a liquid charged with particles according to any one of claims 1 to 4, **characterised in that** a ratio of diameter of the chamber (30) to an internal diameter of the conduit (4, 28, 34) is 5, or more.

6. Device for filtering a liquid charged with particles according to any one of claims 1 to 5, **characterised in that** the diffuser (29) is made of PTFE.

7

FIG. 1

FIG. 2

FIG. 3

FIG. 4

FIG. 5

## RÉFÉRENCES CITÉES DANS LA DESCRIPTION

**Documents brevets cités dans la description**

- EP 0104785 A3
- WO 2007054146 A1
- WO 2002066140 A1
- WO 1995018198 A1
- US 4514306 A
- WO 2002077555 A1
- EP 1553260 A2
- WO 2008144165 A
- WO 2013076242 A
- US 5954922 A